# EUROPÄISCHE PATENTSCHRIFT

(11) **EP 2 250 061 B1**
(45) Veröffentlichungstag und Bekanntmachung des Hinweises auf die Patenterteilung: **18.03.2015**
(21) Anmeldenummer: 09715310.0
(22) Anmeldetag: 20.02.2009
(51) Int. Cl.: B60W 30/188, F02D 41/02, F02B 29/04, F02B 37/00

(54) **VERFAHREN UND VORRICHTUNG ZUM STEUERN EINES ABTRIEBSDREHMOMENTES EINES MIT EINER VERBRENNUNGSKRAFTMASCHINE GEKOPPELTEN AUTOMATISIERTEN GETRIEBES**
METHOD AND DEVICE FOR CONTROLLING AN OUTPUT TORQUE OF AN AUTOMATED TRANSMISSION COUPLED TO AN INTERNAL COMBUSTION ENGINE
PROCEDE ET DISPOSITIF DE COMMANDE D'UN COUPLE DE SORTIE D'UNE BOÎTE DE VITESSES AUTOMATIQUE COUPLEE AVEC UN MOTEUR A COMBUSTION INTERNE

(30) Priorität: 28.02.2008 DE 102008011624
(43) Veröffentlichungstag der Anmeldung: 17.11.2010
(73) Patentinhaber: KNORR-BREMSE Systeme für Nutzfahrzeuge GmbH, 80809 München (DE)
(72) Erfinder: NEMETH, Huba, H-1116 Budapest (HU); MAYR, Mathias, 82110 Germering (DE); MARX, Manuel, 85258 Weichs (DE); HERGES, Michael, 80935 München (DE)
(74) Vertreter: Mattusch, Gundula
(86) Internationale Anmeldenummer: PCT/EP2009/001256
(87) Internationale Veröffentlichungsnummer: WO 2009/106275

(56) Entgegenhaltungen:
- WO-A-2009/103588
- WO-A-2009/103589
- DE-A1- 10 361 913
- JP-A- 4 238 746

## Beschreibung

Die Erfindung betrifft ein Verfahren und eine Vorrichtung zum Steuern eines Abtriebsdrehmomentes eines mit einer Verbrennungskraftmaschine gekoppelten automatisierten Getriebes.

Ein automatisiertes Getriebe ist heute bei modernen Fahrzeugen, zum Beispiel Nutzfahrzeugen, Stand der Technik. Es führt mittels einer Getriebesteuereinheit fahrerunabhängig und elektronisch gesteuert eine Gangwahl zur Steuerung eines Abtriebsdrehmomentes des Getriebes zur Anpassung eines Drehmomentes der Verbrennungskraftmaschinen und eine Kupplungsbetätigung durch. Die Getriebesteuereinheit kommuniziert auf elektronischem Wege mit anderen Steuergeräten des Fahrzeugs und erhält auf diese Weise die notwendigen Eingangssignale, wie beispielsweise Fahrzeuggeschwindigkeit, Motordrehzahl, Fahrerwunsch, usw., berechnet sich selbst weitere physikalische Größen, wie zum Beispiel die Fahrzeugmasse und/oder Fahrbahnsteigung, und nimmt entsprechende Aktionen zur Gangwahl vor. Bei einer Drehmomentanforderung durch den Fahrer, zum Beispiel Gasgeben, schaltet das automatisierte Getriebe in eine größere Übersetzung, da die Verbrennungskraftmaschine in höheren Drehzahlbereichen ein größeres Moment liefert. Die höhere Drehzahl bewirkt neben dem höheren Moment aber nachteilig einen höheren Kraftstoffverbrauch.

Verbrennungskraftmaschinen, wie zum Beispiel eine Kolbenmaschine vom Typ eines Dieselmotors, sind mit einem Abgasturbolader zur Erhöhung eines Ansaugdrucks in einer Ansaugleitung für die Verbrennungskraftmaschine ausgerüstet. Sie weisen einen Betriebszustand beim Beschleunigen, speziell bei niedriger Motordrehzahl, auf, der als "Turboloch" bezeichnet wird. Hierbei reagiert die Verbrennungskraftmaschine beim Gasgeben mit einer Drehzahlerhöhung erst nach einer bestimmten Verzögerungszeit, in welcher keine Abgasenergie zum Antrieb des Abgasturboladers und somit keine komprimierte Ansaugluft mit entsprechendem Ansaugdruck zur Verfügung steht.

Die Gattungsgemäße Anmeldeschrift DE 103 61 913 A1 gibt eine Ladeunterstützung mit komprimierter Luft aus einem Pufferspeicher für ein Turboloch bei einer Verbrennungsmaschine mit Abgasturbolader an. Der Verbrennungsmaschine wird diese Zusatzluft während des Betriebes in einem Drehzahlbereich mit unzureichendem Drehmoment der Ansaugluft in Strömungsrichtung nach dem Abgasturbolader über ein Steuerventil zugeführt. Das Steuerventil wird dabei von einem Regler gesteuert, welcher Impulse vom Gaspedal und einem Drehzahlmesser erhält.

EP 12 55 031 A2 beschreibt ein Steuersystem und Verfahren für ein Fahrzeug mit einer Verbrennungsmaschine mit Turbolader und einem Getriebe. Der Motor wird von einer Motorsteuereinheit und das Getriebe von einer Getriebesteuereinheit gesteuert. Diese Steuereinheiten kommunizieren untereinander. Die Verbrennungsmaschine ist mit einer Abgasrückführung und einem dazugehörigen Ventil ausgerüstet. Die Abgasrückführung weist einen Kühler auf. Eine Einblaslufteinrichtung zum Einblasen von Druckluft ist nicht angegeben.

WO 2009/103588 A ist Stand der Technik nach Artinol 54(3) EPÜ.

Zur Überbrückung des "Turbolochs" sind weitere Lösungsvorschläge gemacht worden, welche zum Beispiel die Offenlegungsschriften DE 10 2006 008 783 A1,

DE 10 2006 785 A1, WO 2006/089779 A1 beschreiben. Eine Verbrennungsmaschine mit Turbolader weist eine Einblaslufteinrichtung für Druckluft auf. Hierbei wird mittels der Einblaslufteinrichtung Druckluft, zum Beispiel aus einem Druckluftspeicher, gesteuert in die Ansaugleitung, konkret in den Einlasskrümmer, der Verbrennungskraftmaschine eingeblasen, um bei erhöhtem Ansaugluftbedarf der Verbrennungskraftmaschine diesen zu decken. Diese angegebene Vorrichtung bzw. dies angegebene Verfahren hat das Ziel, das Beschleunigungsverhalten des Nutzkraftfahrzeuges mit turboaufgeladener Kolbenbrennkraftmaschine zu verbessern, d. h. das Beschleunigungsvermögen zu erhöhen.

Die Aufgabe der vorliegenden Erfindung besteht darin, ein Verfahren und eine Vorrichtung zum Steuern eines Abtriebsdrehmomentes eines mit einer Verbrennungskraftmaschine gekoppelten automatisierten Getriebes unter Berücksichtigung von Betriebsparametern der Verbrennungskraftmaschine und des automatisierten Getriebes bereitzustellen, wobei die obigen Nachteile bedeutend verringert und weitere Vorteile geschaffen sind.

Die Aufgabe wird mit einem Verfahren mit den Merkmalen des Anspruchs 1 und durch eine Vorrichtung mit den Merkmalen des Anspruchs 11 gelöst.

Eine Getriebesteuereinheit erzeugt bei einer Drehmomentanforderung und anhand aktueller Betriebsparameter der Verbrennungskraftmaschine und des automatisierten Getriebes ein Einblasluftsignal, durch welches eine Einblaslufteinrichtung für eine festlegbare Zeitdauer aktiviert wird. Dadurch wird ein vorteilhaftes Steuern eines Abtriebsmomentes des automatisierten Getriebes derart erreicht, dass zum Beispiel Schaltvorgänge zur Erhöhung des Abtriebsmomentes in ihrer Häufigkeit reduziert bzw. vermieden werden, wodurch sich eine Kraftstoffersparnis ergibt, da die Verbrennungskraftmaschine ihre verbrauchsgünstige Drehzahl beibehält, aber ihr Moment durch die eingeblasene Luft vergrößert wird.

Somit kann eine Schaltstrategie der Getriebesteuereinheit eines automatisierten Getriebes zum Schalten von Gangstufen und zur Kupplungssteuerung an diese Möglichkeiten eines schnellen Drehmomentaufbaus und erweiterten Drehmomentbandes bzw. -bereiches einer turboaufgeladenen Verbrennungskraftmaschine vorteilhaft angepasst werden. Hierbei wird der durch das Einblasluftsignal ausgelöste Einblasevorgang gezielt in die Schaltstrategie des Getriebes integriert, d. h. die Getriebesteuereinheit aktiviert die Einblaslufteinrichtung derart, dass entsprechend des Einblasluftsteuersignals Luft eingeblasen wird. Dabei kann es auch möglich sein, dass das Einblasluftsteuersignal zum Beispiel Dauer, Druck und/oder Menge der Einblasluft durch seine Form und/oder zeitliche Dauer festlegt.

Die Getriebesteuereinheit ist mit einer Einblasluftsteuereinheit verbunden. Natürlich kann die Getriebesteuereinheit Bestandteil einer Motorsteuereinheit sein. Es ist auch möglich, dass die Einblasluftsteuereinheit Bestandteil der Getriebe- und/oder Motorsteuereinheit ist.

Ein erfindungsgemäßes Verfahren zum Steuern eines Abtriebsdrehmomentes eines mit einer Verbrennungskraftmaschine gekoppelten automatisierten Getriebes mit einer Getriebesteuereinheit, wobei die Verbrennungskraftmaschine einen Abgasturbolader und eine Einblaslufteinrichtung zum Einblasen von Luft in eine Ansaugleitung aufweist, umfasst folgende Verfahrensschritte:
Empfangen einer Drehmomentanforderung durch die Getriebesteuereinheit;
Erzeugen eines Einblasluftsignals durch die Getriebesteuereinheit anhand der Drehmomentanforderung und aktueller Betriebsparameter der Verbrennungskraftmaschine und des automatisierten Getriebes; und
Steuern des Abtriebsdrehmomentes durch Aktivieren der Einblaslufteinrichtung anhand des Einblasluftsignals zum Einblasen von Luft in die Ansaugleitung die Verbrennungskraftmaschine für eine festlegbare Zeitdauer.

Eine erfindungsgemäße Vorrichtung zur Steuerung eines Abtriebsdrehmomentes eines automatisierten Getriebes mit einer Getriebesteuereinheit, welches mit einer einen Abgasturbolader aufweisenden Verbrennungskraftmaschine gekoppelt ist, weist Folgendes auf:
ein Motorsteuergerät zur Steuerung der Verbrennungskraftmaschine und Erzeugung und/oder Weiterleitung von Drehmomentanforderungen für die Getriebesteuereinheit; und
eine Einblaslufteinrichtung mit einem Einblasluftzuführungsabschnitt mit einer Einblasluftsteuereinheit zur gesteuerten Zuführung von Einblasluft in eine Ansaugleitung der Verbrennungskraftmaschine,
wobei die Getriebesteuereinheit zur Erzeugung eines Einblasluftsignals anhand der Drehmomentanforderung und aktueller Betriebsparameter der Verbrennungskraftmaschine und des automatisierten Getriebes ausgebildet ist, und wobei die Getriebesteuereinheit mit der Einblasluftsteuereinheit zur Steuerung des Abtriebsdrehmomentes verbunden ist.

Vorteilhafte Ausbildungen sind in den Unteransprüchen angegeben.

Durch eine derartige Integration eines Einblasvorgangs von Luft, zum Beispiel Druckluft aus einem Reservoir oder Druckluftbehälter, in eine Schaltstrategie des automatisierten Getriebes wird eine vorteilhafte Kraftstoffeinsparung erreicht, indem Schaltvorgänge zur Erhöhung des Abtriebsmomentes verringert bzw. vermieden werden. Diese Schaltvorgänge legen normalerweise eine größere Übersetzung ein (beispielsweise bei einer Drehmomentanforderung über einen so genannten "Kick-Down"), da die Verbrennungskraftmaschine in höheren Drehzahlbereichen ein größeres Moment aufweist. Die höhere Drehzahl bedeutet aber auch höherer Kraftstoffverbrauch. Bei einer Drehmomentanforderung und aktueller Betriebsparameter der Verbrennungskraftmaschine und des automatisierten Getriebes wird nun erfindungsgemäß ein Einblasluftsignal erzeugt, welches ein Einblasen von Luft in die Ansaugleitung der Verbrennungskraftmaschine bewirkt, wodurch das Moment der Verbrennungskraftmaschine bei im Wesentlichen gleichbleibender und somit beibehaltener verbrauchsgünstiger Drehzahl erhöht wird. Ein Schaltvorgang in eine höhere Übersetzungsstufe ist nicht erforderlich oder kann verzögert erfolgen, zum Beispiel nach Beendigung des Einblasvorgangs.

Die aktuellen Betriebsparameter der Verbrennungskraftmaschine können zum Beispiel deren Drehzahl, Temperatur, Belastung, Drehmoment sein. Aktuelle Betriebsparameter des automatisierten Getriebes sind zum Beispiel gewählte Gangstufe, Schaltprozess, Kupplungsprozess, Zwischengasvorgang, Zwischenkuppelvorgang und dergleichen.

In bestimmten Fällen kann es auch vorteilhaft sein, dass ein Schalten in eine andere Übersetzungsstufe beim Einblasvorgang verzögert oder zusammen mit diesem erfolgt.

Neben einer derartigen Vermeidung von Schaltvorgängen in höhere Übersetzungen kann ein Schaltpunkt, bei dem das Getriebe den Schaltvorgang in einen niedrigeren Gang vornimmt, in Richtung niedrigere Drehzahlen der Verbrennungskraftmaschine verlegt werden, da mit dem Einblasvorgang anhand einer Drehmomentanforderung zum Erniedrigen des Drehmomentes beim Steuern des Abtriebsdrehmomentes ein Schaltvorgang des automatisierten Getriebes in eine niedrigere Übersetzungsstufe nach Beendigung des Aktivierens der Einblaslufteinrichtung erfolgt und dabei ein größeres Motormoment, d.h. Drehmoment der Verbrennungskraftmaschine, vorhanden ist.

Weiterhin kann es auch möglich sein, dass das Getriebe bei Beschleunigungsvorgängen früher, das heißt zusammen mit dem Einblasvorgang oder bei dem Einblasvorgang, in einen höheren Gang schaltet und damit Phasen hoher Motordrehzahl, die höherem Kraftstoffverbrauch entsprechen, vermeidet. Denn nach dem Schaltvorgang kann ein eventueller Mangel an ausreichendem Motormoment durch eine gezielte Einblasung von Luft kompensiert werden.

Es ist auch möglich, dass bei einem Hoch- bzw. Herunterschalten eine oder mehrere Gangstufen übersprungen werden können.

Das Einblasluftsignal kann anhand der Drehmomentanforderung und aktueller Betriebsparameter der Verbrennungskraftmaschine und des automatisierten Getriebes erzeugt werden, was zum Beispiel von der Getriebesteuereinheit durchgeführt wird, in welcher die Schaltstrategie beispielsweise als Software eines Mikrokontrollersystems vorhanden sein kann. Damit wird das Einblasluftsignal vorteilhaft flexibel an Betriebsbedingungen anpassbar.

Die Getriebesteuereinheit ist bevorzugt mit einem Motorsteuergerät oder einem anderen Steuergerät der Verbrennungskraftmaschine zum Kommunizieren zum Empfangen von Drehmomentanforderungen und aktuellen Betriebsparametern der Verbrennungskraftmaschine verbunden. Hierbei können die anderen Steuergeräte folgende Einrichtungen zur Erzeugung einer Drehmomentänderung aufweisen: Automatische Geschwindigkeitsregelung; elektronische Stabilisierung; Antriebsschlupfregelung; Fahrerassistenzsysteme und dergleichen.

In einer weiteren Ausführung werden beim Erzeugen eines Einblasluftsignals Betriebsparameter des Abgasturboladers wie zum Beispiel Drehzahl, Förderleistung und/oder Verdichterdruck berücksichtigt. Es ist dabei möglich, dass die Drehzahl des Turboladers mittels eines Drehzahlsensors gemessen wird, der zum Beispiel mit der Getriebesteuereinheit verbunden ist. Die Fördermenge des Turboladers kann auch aus diversen Eingangssignalen, zum Beispiel des Motorsteuergerätes, von der Getriebesteuereinheit berechnet werden. Ebenso kann ein Verdichterdruck mittels eines Sensors, der auch mit der Getriebesteuereinheit in Kommunikation steht, ermittelt werden.

Dies ist zum Beispiel von Vorteil, wenn bei einer Konstantfahrt bei mittlerer Drehzahl der Verbrennungskraftmaschine eine akute Drehmomentanforderung durch den Fahrer erfolgt. Dabei kann die Getriebesteuereinheit bei bekannter Fördermenge des Abgasturboladers erkennen, ob der Verdichterdruck des Abgasturboladers ausreichend ist und gegebenenfalls bei nicht ausreichendem Verdichterdruck den Aufbau des Verdichterdrucks mit einer entsprechenden Lufteinblasung beschleunigen. Damit wird vermieden, dass das Getriebe nur durch so genanntes "Runterschalten" dem Fahrerwunsch zur Drehmomenterhöhung gerecht wird und erhöhten Kraftstoffverbrauch bewirkt.

Die festlegbare Zeitdauer für das Einblasen von Luft kann durch einen Parameter des Einblasluftsignals festgelegt werden. So ist zum Beispiel möglich, den Einblasvorgang durch eine zeitliche Länge des Einblasluftsignals festzulegen und auch zu verändern. Es ist auch möglich, dass die festlegbare Zeitdauer durch das Einblasluftsignal in Form eines Startimpulses eingeschaltet und in Form eines Stopimpulses ausgeschaltet wird. Auch Impulsfolgen, zum Beispiel mit variabler Frequenz, sind möglich. Hierbei ist entscheidend, dass eine Störfestigkeit des Einblasluftsignals hoch ist. Es ist bekannt, dass ein unsynchronisiertes Handschaltgetriebe in einem schweren Nutzfahrzeug mit doppelter Kupplungsbetätigung (so genanntes "Zwischenkuppeln") herauf- und durch so genanntes "Zwischengas" heruntergeschaltet wird. Das Schaltverfahren im Nutzfahrzeug, das mit einem automatisierten und unsynchronisierten Stufengetriebe ausgerüstet ist, weist eine ähnliche Verfahrensabfolge auf, wie sie der Fahrer beim manuellen Schalten durchführt. Ein bedeutender Vorteil des automatisierten Stufengetriebes besteht darin, dass das Schalten in kürzerer Zeit durchgeführt wird, als es ein Fahrer manuell ausführen kann. Hieraus folgt eine geringere Zeit mit Ziehkraftverlust im Vergleich zum Handschaltgetriebe. Es gibt Nutzkraftfahrzeuge, zum Beispiel in der Bauwirtschaft, bei denen es von großer Bedeutung ist, dass das Fahrzeug nur eine möglichst minimale Zeit mit Ziehkraftverlust arbeitet. Dies automatisierte Schaltverfahren enthält mehrere Verfahrensschritte, von denen einer das "Zwischengas" ist, womit die Kolbenbrennkraftmaschine kurzzeitig beschleunigt wird, um die zur Synchronisation der Getriebestufen benötigte Drehzahl zu erreichen. Dann kann die Eingangswelle des Getriebes durch kurzzeitiges Kupplungsschließen auf die Synchrondrehzahl beschleunigt werden. Beim Heraufschalten erfolgt nur ein Zwischenkuppeln ohne Zwischengas. Der größte Zeitaufwand dieses Zwischengasvorgangs liegt in der Beschleunigung der Verbrennungskraftmaschine, da in diesem Betriebszustand bei turboaufgeladener Ausführung nur mit sehr niedrigen Ladedrücken gearbeitet werden kann. Daraus resultiert ein ähnliches Drehmoment wie bei einem Saugmotor. Diese Beschleunigung kann deutlich dadurch verbessert werden, indem in dieser Zwischengasphase das Einblasluftsignal für eine festlegbare Zeitdauer erzeugt wird und Einblasluft eingeblasen wird, wodurch der Motor mit hohem Ladedruck in der Drehzahl beschleunigt. Diese Zwischengasphase kann somit um ca. 50 bis 70% verringert werden.

Bei der Beschleunigung eines Fahrzeugs mit turboaufgeladener Verbrennungskraftmaschine aus dem Stillstand heraus spielt das Ansprechverhalten eine wesentliche Rolle. Im Fall eines schlechten Ansprechverhaltens (z. B. an einer Fahrbahnsteigung) wird der Fahrer mit hohen Drehzahlen und entsprechend hohem Kupplungsschlupf versuchen, eine ausreichend hohe Ziehkraft zu realisieren. Das ergibt eine hohe Belastung der Bauteile verbunden mit hohem Verschleiß des Kupplungsbelags, zum Beispiel verbrannter Kupplungsbelag. Es ist nun in einer weiteren Ausführung vorgesehen, dass das Einblasluftsignal bei einem Anfahrvorgang für eine festlegbare Zeitdauer erzeugt wird. Damit wird eine gezielte Drucklufteinblasung ausgelöst, wodurch die benötigte Motordrehzahl bei der Beschleunigung eines turboaufgeladenen Verbrennungsmotors aus dem Stillstand auf einem deutlich niedrigeren Niveau als ohne gehalten werden. Dazu muss jedoch die Kupplungsbetätigung angepasst werden. Daraus resultieren eine kürzere Einkuppelphase und eine verbesserte Steigungskapazität. Gleichzeitig werden die Bauteilbelastungen deutlich reduziert und die Lebensdauer der Kupplung erhöht.

In einer bevorzugten Ausführung ist vorgesehen, dass der Einblasluftzuführungsabschnitt ein Frischgasleitungsabschnitt einer Einrichtung zur Frischluftversorgung zum gesteuerten Einblasen von Druckluft ist.

Die Verbrennungskraftmaschine ist durch Anwendung des oben beschriebenen Verfahrens in der Lage, einen erweiterten Motordrehzahlbereich effektiv abzudecken. Dies ermöglicht, dass die Gangzahl des/der verwendeten Getriebe verringert werden kann, was zu einer Kosten- und Bauraumeinsparung beim Getriebe führt. Gleichzeitig ergibt dies eine Gewichtsreduktion mit einhergehendem reduzierten Kraftstoffverbrauch.

Es ist denkbar, dass die Einblaslufteinrichtung zu ihrer Steuerung ein separates Steuergerät aufweist oder dass ihre Steuerung durch das Motorsteuergerät oder die Getriebesteuereinheit oder ein sonstiges, mindestens eine weitere Steueraufgabe übernehmendes Steuergerät eines Fahrzeugs erfolgt, welches ergänzend zur Steuerung der Einblaslufteinrichtung mit ausgelegt ist. Wesentlich ist die nach den Ansprüchen vorgesehene funktionale Verknüpfung.

Die Erfindung wird nun anhand einer beispielhaften Ausführung mit Bezug auf die beigefügten Zeichnungen der Figur näher erläutert. Hierbei zeigt:
- Fig. 1: eine schematische Darstellung einer Verbrennungskraftmaschine mit einem ersten Ausführungsbeispiel einer erfindungsgemäßen Vorrichtung zur Steuerung eines Abtriebsdrehmomentes;
- Fig. 2: eine schematische Darstellung einer Verbrennungskraftmaschine mit einem zweiten Ausführungsbeispiel der erfindungsgemäßen Vorrichtung zur Steuerung eines Abtriebsdrehmomentes; und
- Fig. 3a-g: grafische Darstellungen von Verhalten von Fahrzeugparametern eines Fahrzeugs im Verlauf einer Fahrbahnsteigung.

Gleiche Bauteile mit gleicher oder ähnlicher Funktion sind in den Figuren mit gleichen Bezugszeichen versehen.

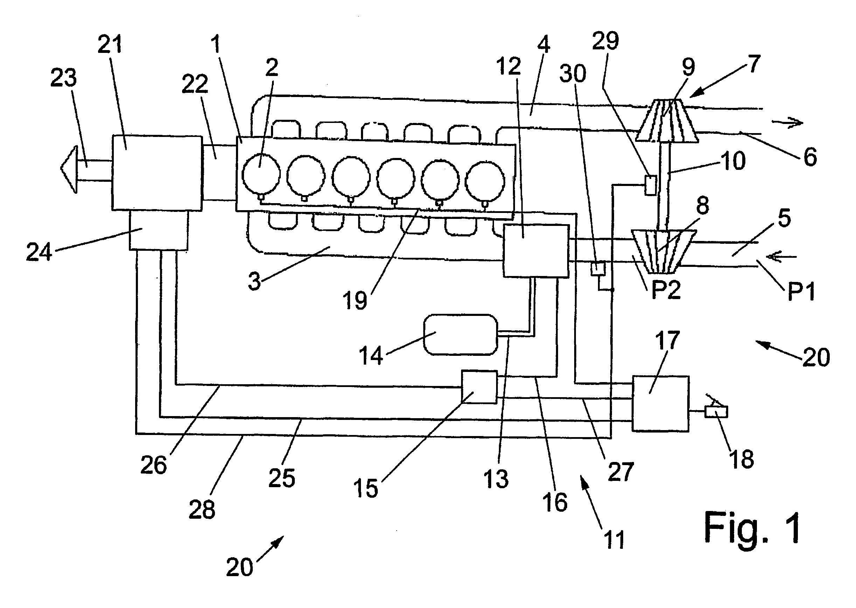

Fig. 1 zeigt eine schematische Darstellung einer Verbrennungskraftmaschine 1 in einem ersten Ausführungsbeispiel einer erfindungsgemäßen Vorrichtung 20 zum Steuern eines Abtriebsdrehmomentes eines Getriebeabtriebs 23 eines automatisierten Getriebes 21. Der Getriebeabtrieb 23 ist mit einem nicht gezeigten Antriebsstrang von Rädern eines ebenfalls nicht gezeigten Fahrzeugs verbunden. Das automatisierte Getriebe 21 ist hier über eine Kupplung 22 mit der Verbrennungskraftmaschine 1 gekoppelt, die hier schematisch mit vier Zylindern 2, einer Ansaugleitung 3 und einer Abgasleitung 4 als Dieselmotor gezeigt ist. Das automatisierte Getriebe 21 weist eine Getriebesteuereinheit 24 auf, welche weiter unten noch ausführlicher beschrieben wird.

Die Ansaugleitung 3 ist über einen Einblasluftzuführungsabschnitt 12 mit einem Verdichter 8 eines Abgasturboladers 7 verbunden, welcher am Lufteinlass 5 für Frischluft mit einem Einlassdruck P1 angeschlossen ist. Der Verdichter 8 des Abgasturboladers 7 ist über eine Welle 10 mit einer Abgasturbine 9 gekoppelt, welche in der Abgasleitung 4 vor einem Abgasauslass 6 für Abgas der Verbrennungskraftmaschine 1 angeordnet ist und von dem Abgas angetrieben wird. Der Verdichter 8 erzeugt bei Betrieb der Verbrennungskraftmaschine 1 in Abhängigkeit von deren Abgasmenge und -druck einen Verdichterdruck P2.

In diesem Beispiel ist der Einblasluftzuführungsabschnitt 12 weiterhin mit einer Einblasluftleitung 13 zur Zuführung von Druckluft aus einem Einblasluftbehälter 14, der zum Beispiel ein Druckluftbehälter sein kann, verbunden. Die Druckluft wird mittels einer Einblasluftsteuereinheit 15, die mit dem Einblasluftzuführungsabschnitt 12 über eine Einblasluftsteuerleitung 13 verbunden ist, über ein nicht gezeigtes Ventil gesteuert zugeführt. Der Einblasluftzuführungsabschnitt 12 ist in diesem Beispiel ein Frischgas- bzw. Frischluftleitungsabschnitt, wie er in der DE 10 2006 008 783 A1 und DE 10 2006 008 785 A1 im Zusammenhang mit einer zugehörigen Drucklufterzeugung beschrieben wird. Auf eine ausführliche Erläuterung wird daher hier verzichtet. Der Einblasluftzuführungsabschnitt 12 mit Einblasluftleitung 13 und Einblasluftbehälter 14, und die Einblasluftsteuereinheit 15 mit Einblasluftsteuerleitung 16 bilden die Einblaslufteinrichtung 11.

Ein Motorsteuergerät 17 ist mit Einspritzanlagen der Zylinder 2 verbunden. Hierzu ist nur eine Steuerleitung 19 symbolisch angedeutet. Eine Steuerverbindung 27 ist an einer Einblasluftsteuereinheit 15 des Einblasluftzuführungsabschnitts 12 angeschlossen. Das Motorsteuergerät 17 steuert die Verbrennungskraftmaschine 1 in bekannter Weise und wird nicht weiter erläutert. Es ist mit einem Fahrpedal 18 zum Empfang von Fahrerwünschen verbunden. Weiterhin kann das Motorsteuergerät 17 mit nicht dargestellten weiteren Steuergeräten, zum Beispiel Fahrgeschwindigkeitsregelung und dergleichen, verbunden sein.

Das automatisierte Getriebe 21 und die Kupplung 22 werden von der Getriebesteuereinheit 24 gesteuert. Die Kupplung 22 kann auch Bestandteil des Getriebes 21 sein und wird nicht näher erläutert. Die Getriebesteuereinheit 24 ist mit der Motorsteuereinheit 17 zum Empfang von Drehmomentanforderungen, zum Beispiel Beschleunigung, etc., über eine Motorsteuerverbindung 25 verbunden.

Die Getriebesteuereinheit 24 ist weiterhin über eine Einblasluftsteuerverbindung 26 mit der Einblasluftsteuereinheit 15 verbunden. In diesem Beispiel ist die Getriebeeinheit auch mit einem Drehzahlsensor 29 zur Ermittlung einer Drehzahl des Abgasturboladers 7 und mit einem Drucksensor zur Ermittlung des Verdichterdrucks P2 verbunden.

Bei einer Drehmomentanforderung, zum Beispiel durch Fahrerwunsch über das Gaspedal 18, wird diese Drehmomentanforderung über die Motorsteuerung 17 und die Motorsteuerverbindung 25 an die Getriebesteuereinheit 24 weitergeleitet. Ist damit ein Zwischengasvorgang und/oder ein Zwischenkuppelvorgang des automatisierten Getriebes 21 verbunden, wie weiter unten noch ausführlicher erläutert wird, so werden diese Betriebszustände des Getriebes 21 von der Getriebesteuereinheit 24 selbst mit einbezogen. Die Funktion des Motorsteuergerätes 17 wird hier nicht erläutert. Die Getriebesteuereinheit 24 erzeugt daraufhin ein Einblasluftsignal anhand der Drehmomentanforderung, welches sie über die Einblasluftsteuerverbindung 26 an die Einblasluftsteuereinheit 15 übermittelt. Die Einblasluftsteuereinheit 15 aktiviert daraufhin über die oben beschriebenen Verbindungen den Einblasluftzuführungsabschnitt 12 zum Einblasen von Druckluft aus dem Einblasluftbehälter 14 in die Ansaugleitung 3 der Verbrennungskraftmaschine 1, wodurch sich das Moment der Verbrennungskraftmaschine 1 bei gleichbleibender Drehzahl vergrößert, wodurch ein Schaltvorgang des Getriebes 21 in eine andere Gangstufe zur Steuerung des Abtriebsdrehmomentes am Getriebeabtrieb 23 nicht erforderlich ist. Dies kann nach dem Aktivieren dieses Einblasluftvorgangs oder auch währenddessen erfolgen. Dieses wird von der Getriebesteuereinheit 2nicht erforderlich ist. Dies kann nach dem Aktivieren dieses Einblasluftvorgangs oder auch währenddessen erfolgen. Dieses wird von der Getriebesteuereinheit 24 anhand von Betriebsparametern der Verbrennungskraftmaschine 1, welche die Getriebesteuereinheit 24 von dem Motorsteuergerät 17 erhält, jeweils individuell an den Betriebszustand angepasst entschieden. Dadurch ist es möglich, dass vor jeder Gangwahl bei einer Drehmomentanforderung, der Einblasluftvorgang mit in die Entscheidung zur Gangauswahl einbezogen wird, wodurch sich eine Krafstoffersparnis und auch ein geringerer Verschleiß der Getriebekomponenten ergeben.

Die Verbindung der Getriebesteuereinheit 24 mit dem Drehzahlsensor 29 und dem Drucksensor 30 dient in diesem Beispiel dazu, auch die Förderleistung des Abgasturboladers 7 in die Schaltstrategie der Getriebesteuereinheit 24 mit zu integrieren. Wenn zum Beispiel bei einer Konstantfahrt bei mittlerer Drehzahl der Verbrennungskraftmaschine 1 eine akute Drehmomentanforderung erfolgt, ist es bei bekannter Fördermenge des Abgasturboladers 7 möglich, dass die Getriebesteuereinheit 24 über den Drucksensor 30 erkennt, ob der Verdichterdruck P2 ausreicht oder nicht. Bei nicht ausreichendem Verdichterdruck P2 kann die Getriebesteuereinheit 24 den Aufbau des Verdichterdrucks durch einen Einblasluftvorgang über ein Einblasluftsteuersignal beschleunigen, wobei gleichzeitig ein Runterschalten mit höherem Kraftstoffverbrauch vermieden bzw. verzögert wird.

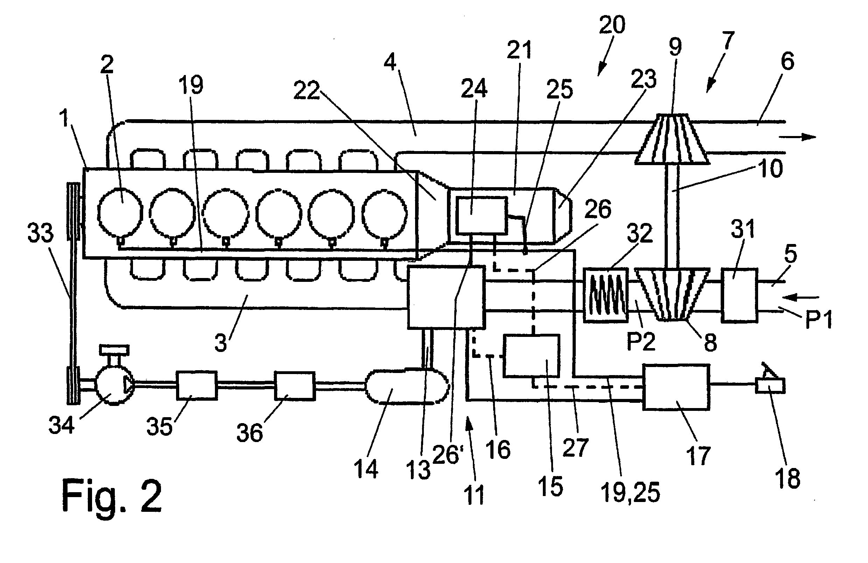

Ein zweites Ausführungsbeispiel einer Verbrennungskraftmaschine 1 ist in Fig. 2 illustriert. Hierbei gilt die zu Fig. 1 bereits angegebene Beschreibung ebenfalls. In diesem Beispiel ist eine Drucklufterzeugung für die Einblasluftspeicherung in dem Einblasluftspeicher 14 dargestellt. Ein Kompressor 34 wird über einen Riementrieb 33 von der Kurbelwelle der Verbrennungskraftmaschine 1 ständig angetrieben. Er verdichtet Luft und liefert sie über einen Druckregler 35 und einen Lufttrockner 36 an den Einblasluftspeicher 14. Hiermit wird sichergestellt, dass für das erfindungsgemäße Verfahren jederzeit ausreichend Einblasluft vorhanden ist. Überschüssige verdichtete Luft kann zum Beispiel in einem weiteren Behälter für andere Zwecke gespeichert werden.

In Strömungsrichtung in der Ansaugleitung ist hier vor dem Verdichter 8 ein Luftfilter 31 und hinter dem Verdichter 8 ein Wärmetauscher 32 zur angeordnet. Ein weiterer Wärmetauscher kann auch für die Einblasluft vorgesehen sein.

Desweiteren sind in Fig. 2 Varianten der Steuerungsverbindungen gezeigt. Das Motorsteuergerät 17 ist mit dem Einblasluftzuführungsabschnitt 12 zur Steuerung desselben direkt verbunden (durchgezogene Linie). Über die Steuerleitungen 19 und 25 kommunieziert das Motorsteuergerät 17 auch mit der Getriebesteuereinheit 24, die ihrerseits auch direkt mit dem Einblasluftzuführungsabschnitt 12 über eine Einblasluftsteuerverbindung 26' verbunden ist. Hiermit können sowohl das Motorsteuergerät 17 für bestimmte Betriebszustände (z. B. Turboloch) unabhängig von der Getriebesteuereinheit 24, als auch die Getriebesteuereinheit 24 unabhängig von dem Motorsteuergerät 17 den Einblasluftzuführungsabschnitt 12 steuern.

Eine andere Ausführung ist durch die gestrichelten Steuerverbindungen 16, 26, und 27 angegeben. In diesem Fall ist eine separate Einblasluftsteuereinheit 15 vorgesehen, welche über Steuerverbindung 27 mit dem Motorsteuergerät 17 und über Einblasluftsteuerverbindung 26 mit der Getriebesteuereinheit 24 kommuniziert. In Abhängigkeit von diesen Kommunikationen wird der Einblasluftzuführungsabschnitt 12 nur von -dieser Einblasluftsteuereinheit 15 gesteuert. Selbstverständlich sind auch andere Anordnungen möglich.

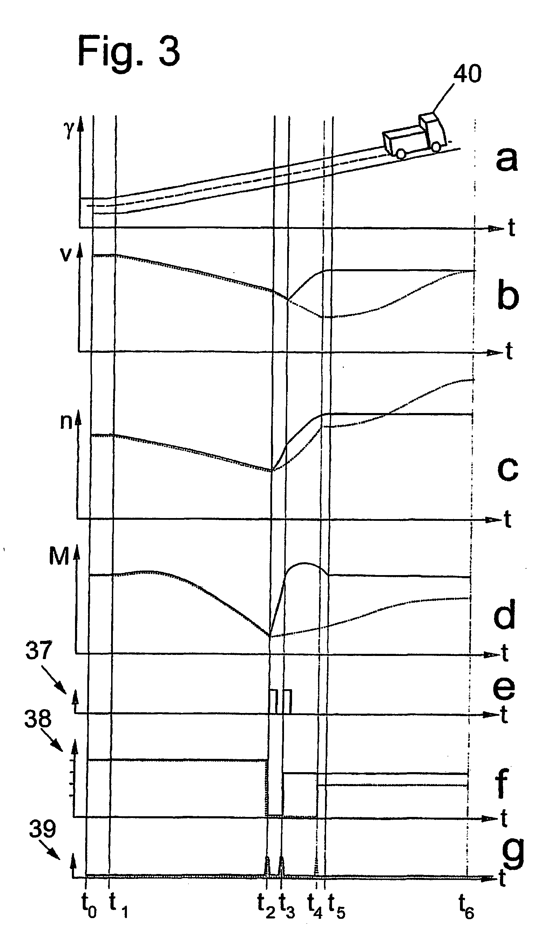

Fig. 3a-g zeigt grafische Darstellungen von Verhalten von Fahrzeugparametern eines Fahrzeugs 40 im Verlauf einer Fahrbahnsteigung.

Alle Figurenabschnitte sind übereinander angeordnet und über eine Zeitachse t verknüpft. Fig. 3a zeigt ein Fahrzeug 40 auf einer Fahrbahnsteigung mit einem Steigungswinkel γ.

Fig. 3b zeigt darunter eine zugeordnete Fahrzeuggeschwindigkeit v.

In Fig. 3c ist eine zugehörige Motordrehzahl n dargestellt, welche mit einem in Fig. 3d gezeigten Motormoment M verknüpft ist.

Fig. 3e stellt Einblasvorgänge 37, und Fig. 3f Getriebeschaltvorgänge dar.

Schließlich zeigt Fig. 3g zugehörige Kupplungsvorgänge 38.

In den Figuren 3b bis 3g entsprechen jeweils die durchgezogenen Kurven der erfindungsgemäßen Vorrichtung mit einer Einblaslufteinrichtung 11, wohingegen die gestrichelten Kurven diese nicht aufweisen.

Zum Zeitpunkt t₀ erfolgt die Fahrt des Fahrzeugs 40 in einer Ebene. Bei t₁ beginnt eine Fahrbahnsteigung. Im Zeitpunkt t₂ erfolgt der Beginn eines Herunterschaltens. Dabei wird für den so genannten Zwischengasvorgang zunächst die Kupplung betätigt, der Leerlauf eingelegt, die Kupplung gelöst und dann Vollgas (entsprechend der Steigung) gegeben, herunter geschaltet und wieder eingekuppelt. Im Fall der Einblaslufteinrichtung 11 wird diese durch das Einblasluftsignal, welches anhand der Betriebsparameter der Verbrennungskraftmaschine 1 und des automatisierten Getriebes 21 erzeugt wird, aktiviert.

Im Zeitpunkt t₃ ist bei dem Fahrzeug mit der Einblaslufteinrichtung 11 das Getriebe synchronisiert. Da nur sehr wenig Zeit vergangen ist, ist die Fahrzeuggeschwindigkeit v während des Herunterschaltens nur geringfügig abgesunken. Es genügt daher, nur einen Gang herunter zu schalten. Um den Aufbau des Motormomentes M weiter zu beschleunigen, kann ein weiteres Einblasen von Einblasluft erfolgen.

Im Zeitpunkt t₄ ist das Getriebe ohne Einblaslufteinrichtung 11 erst jetzt synchronisiert. Da viel Zeit vergangen ist, müssen zwei Gangstufen zurückgeschaltet werden.

Im Zeitpunkt t₅ hat das Fahrzeug 40 mit der Einblaslufteinrichtung 11 bereits seine Endgeschwindigkeit v erreicht. Da es nur einen Gang zurückschalten musste, fährt es ab diesem Zeitpunkt mit verbrauchsgünstiger Motordrehzahl n.

Im Zeitpunkt t₆ hat das Fahrzeug 40 ohne Einblaslufteinrichtung 11 erst jetzt seine Endgeschwindigkeit v erreicht. Es musste zwei Gänge zurückschalten. Daher fährt es nun mit verbrauchsungünstiger hoher Drehzahl n.

Beim so genannten Zwischenkuppelvorgang beim Heraufschalten wird zunächst die Kupplung betätigt, der Leerlauf eingelegt, die Kupplung losgelassen, kurz danach wieder betätigt, um in den nächsten Gang herauf zu schalten und dann erneut losgelassen.

Die Erfindung ist nicht auf die oben beschriebenen Ausführungsbeispiele beschränkt. Sie ist im Rahmen der beigefügten Ansprüche modifizierbar.

So kann zum Beispiel die Getriebesteuereinheit 24 dazu ausgelegt sein, die Betriebsparameter des Abgasturboladers 7 aus anderen Eingangssignalen, zum Beispiel aus dem Motorsteuergerät 17, mittels eines entsprechenden Algorithmus zu berechnen.

Der Einblasluftzuführungsabschnitt 12 kann ein Frischgasleitungsabschnitt der in der DE 10 2006 008 783 A1 und DE 10 2006 008 785 A1 beschriebenen Drucklufteinrichtung sein und mit dieser gekoppelt sein.

Die Getriebesteuereinheit 24 kann auch als ein für diese Steueraufgabe ausgelegter Bestandteil des Motorsteuergerätes 17 oder eines sonstigen Steuergerätes oder dgl. ausgebildet sein. Sie kann aber auch als ein eigenständiges Steuergerät ausgebildet werden.

Die Einblasluft für die Einblaslufteinrichtung 11 kann auch aus einer anderen Quelle, zum Beispiel direkt aus einem Verdichter, stammen.

Das Einblasluftsignal kann in seiner Dauer variiert werden. Es ist auch möglich, dass es in bestimmten Zeitabständen wiederholt wird oder aus mehreren Einzelsignalen mit gleicher oder unterschiedlicher Länge und/oder Gestalt besteht.

### Bezugszeichenliste

- 1: Verbrennungskraftmaschine
- 2: Zylinder
- 3: Ansaugleitung
- 4: Abgasleitung
- 5: Lufteinlass
- 6: Abgasauslass
- 7: Abgasturbolader
- 8: Verdichter
- 9: Abgasturbine
- 10: Welle
- 11: Einblaslufteinrichtung
- 12: Einblasluftzuführungsabschnitt
- 13: Einblasluftleitung
- 14: Einblasluftspeicher
- 15: Einblasluftsteuereinheit
- 16: Einblassteuerleitung
- 17: Motorsteuergerät
- 18: Fahrpedal
- 19: Steuerleitung
- 20: Vorrichtung
- 21: Getriebe
- 22: Kupplung
- 23: Getriebeabtrieb
- 24: Getriebesteuereinheit
- 25: Motorsteuerverbindung
- 26, 26': Einblasluftsteuerverbindung
- 27: Steuerverbindung
- 28: Sensorverbindung
- 29: Drehzahlsensor
- 30: Drucksensor
- 31: Luftfilter
- 32: Wärmetauscher
- 33: Riementrieb
- 34: Kompressor
- 35: Druckregler
- 36: Lufttrockner
- 37: Einblasvorgang
- 38: Getriebeschaltvorgang
- 39: Kupplungsvorgang
- 40: Fahrzeug
- n: Motordrehzahl
- M: Motormoment
- P1: Einlassdruck
- P2: Verdichterdruck
- t, t_{0...6}: Zeit
- v: Fahrzeuggeschwindigkeit
- γ: Steigungswinkel

## Patentansprüche

1. Verfahren zum Steuern eines Abtriebsdrehmomentes eines mit einer Verbrennungskraftmaschine (1) gekoppelten automatisierten Getriebes (21) mit einer Getriebesteuereinheit (24), wobei die Verbrennungskraftmaschine (1) einen Abgasturbolader (7) und eine Einblaslufteinrichtung (11) zum Einblasen von Luft in eine Ansaugleitung (3) aufweist, mit folgenden Verfahrensschritten:
(i) Empfangen einer Drehmomentanforderung durch die Getriebesteuereinheit (24);
(ii) Erzeugen eines Einblasluftsignals durch die Getriebesteuereinheit (24) anhand der Drehmomentanforderung und aktueller Betriebsparameter der Verbrennungskraftmaschine (1) und des automatisierten Getriebes (21); und
(iii) Steuern des Abtriebsdrehmomentes durch Aktivieren der Einblaslufteinrichtung (11) anhand des Einblasluftsignals zum Einblasen von Luft in die Ansaugleitung (3) die Verbrennungskraftmaschine (1) für eine festlegbare Zeitdauer,
wobei bei einer Drehmomentanforderung zum Erhöhen des Drehmomentes beim Steuern des Abtriebsdrehmomentes ein Schaltvorgang des automatisierten Getriebes (21) in eine höhere Übersetzungsstufe nach Beendigung des Aktivierens der Einblaslufteinrichtung (11) erfolgt oder unterbleibt,
und dass
bei einer Drehmomentanforderung zum Erhöhen des Drehmomentes beim Steuern des Abtriebsdrehmomentes ein Schaltvorgang des automatisierten Getriebes (21) in zumindest eine höhere Übersetzungsstufe zusammen mit dem Aktivieren oder während des Aktivierens der Einblaslufteinrichtung (11) erfolgt, und dass
bei einer Drehmomentanforderung zum Erniedrigen des Drehmomentes beim Steuern des Abtriebsdrehmomentes ein Schaltvorgang des automatisierten Getriebes (21) in zumindest eine niedrigere Übersetzungsstufe nach Beendigung des Aktivierens der Einblaslufteinrichtung (11) erfolgt, wobei
das Einblasluftsignal bei einem Zwischengasvorgang für eine festlegbare Zeitdauer erzeugt wird.

2. Verfahren nach Anspruch 1, **dadurch gekennzeichnet, dass** die Getriebesteuereinheit (25) die Drehmomentanforderungen und aktuellen Betriebsparameter der Verbrennungskraftmaschine (1) durch Kommunizieren mit einem Motorsteuergerät (17) oder einem oder mehreren anderen Steuergerät der Verbrennungskraftmaschine (1) empfängt.

3. Verfahren nach Anspruch 2, **dadurch gekennzeichnet, dass** die anderen Steuergeräte folgende Einrichtungen zur Erzeugung einer Drehmomentänderung aufweisen: Automatische Geschwindigkeitsregelung; elektronische Stabilisierung; Antriebsschlupfregelung; und/oder Fahrerassistenzsysteme.

4. Verfahren nach einem der vorhergehenden Ansprüche, **dadurch gekennzeichnet, dass** das Erzeugen eines Einblasluftsignals Betriebsparameter des Abgasturboladers (7) berücksichtigt, wobei die Betriebsparameter des Abgasturboladers (7) Drehzahl, Förderleistung und/oder Verdichterdruck (P2) aufweisen.

5. Verfahren nach einem der vorhergehenden Ansprüche, **dadurch gekennzeichnet, dass** die festlegbare Zeitdauer für das Einblasen von Luft durch einen Parameter des Einblasluftsignals festgelegt wird.

6. Verfahren nach einem der vorhergehenden Ansprüche, **dadurch gekennzeichnet, dass** das Einblasluftsignal bei einem Anfahrvorgang für eine festlegbare Zeitdauer erzeugt wird.

7. Vorrichtung (20) zur Steuerung eines Abtriebsdrehmomentes eines automatisierten Getriebes (21) mit einer Getriebesteuereinheit (24), welches mit einer einen Abgasturbolader (7) aufweisenden Verbrennungskraftmaschine (1) gekoppelt ist, mit:
einem Motorsteuergerät (17) zur Steuerung der Verbrennungskraftmaschine (1) und Erzeugung und/oder Weiterleitung von Drehmomentanforderungen für die Getriebesteuereinheit (24); und
einer Einblaslufteinrichtung (11) mit einem Einblasluftzuführungsabschnitt (12) mit einer Einblasluftsteuereinheit (15) zur gesteuerten Zuführung von Einblasluft in eine Ansaugleitung (3) der Verbrennungskraftmaschine (1), wobei die Getriebesteuereinheit (24) zur Erzeugung eines Einblasluftsignals anhand der Drehmomentanforderung und aktueller Betriebsparameter der Verbrennungskraftmaschine (1) und des automatisierten Getriebes (21) ausgebildet ist, und wobei die Getriebesteuereinheit (24) mit der Einblasluftsteuereinheit (15) zur Steuerung des Abtriebsdrehmomentes verbunden ist,
wobei die Getriebesteuereinheit (24) zu Folgendem ausgebildet ist: bei einer Drehmomentanforderung zum Erhöhen des Drehmomentes beim Steuern des Abtriebsdrehmomentes einen Schaltvorgang des automatisierten Getriebes (21) in eine höhere Übersetzungsstufe nach Beendigung des Aktivierens der Einblaslufteinrichtung (11) vorzunehmen oder zu unterlassen, und
bei einer Drehmomentanforderung zum Erhöhen des Drehmomentes beim Steuern des Abtriebsdrehmomentes einen Schaltvorgang des automatisierten Getriebes (21) in zumindest eine höhere Übersetzungsstufe zusammen mit dem Aktivieren oder während des Aktivierens der Einblaslufteinrichtung (11) vorzunehmen, und
bei einer Drehmomentanforderung zum Erniedrigen des Drehmomentes beim Steuern des Abtriebsdrehmomentes einen Schaltvorgang des automatisierten Getriebes (21) in zumindest eine niedrigere Übersetzungsstufe nach Beendigung des Aktivierens der Einblaslufteinrichtung (11) vorzunehmen, wobei
die Getriebesteuereinheit (24) zur Erzeugung des Einblasluftsignals bei einem Zwischengasvorgang für eine festlegbare Zeitdauer ausgebildet ist.

8. Vorrichtung (20) nach Anspruch 7, **dadurch gekennzeichnet, dass** die Getriebesteuereinheit (24) zur Ermittlung einer Fördermenge eines Verdichters (8) des Abgasturboladers (7) und eines Verdichterdrucks (P2) ausgebildet ist.

9. Vorrichtung (20) nach Anspruch 8, **dadurch gekennzeichnet, dass** die Getriebesteuereinheit (24) zur Ermittlung der Fördermenge und des Verdichterdrucks (P2) mit korrespondierenden Sensoren (29, 30) verbunden und/oder zur Berechnung aus Betriebsparametern ausgebildet ist.

10. Vorrichtung (20) nach einem der Ansprüche 7 bis 9, **dadurch gekennzeichnet, dass** der Einblasluftzuführungsabschnitt (12) ein Frischgasleitungsabschnitt einer Einrichtung zur Frischluftversorgung zum gesteuerten Einblasen von Druckluft ist.

11. Vorrichtung (20) nach einem der vorstehenden Vorrichtungsansprüche, **dadurch gekennzeichnet, dass** die Einblaslufteinrichtung zu ihrer Steuerung ein separates Steuergerät aufweist oder dass ihre Steuerung durch das Motorsteuergerät oder die Getriebesteuereinheit oder ein sonstiges, mindestens eine weitere Steueraufgabe übernehmendes Steuergerät eines Fahrzeugs erfolgt, welches ergänzend zur Steuerung der Einblaslufteinrichtung mit ausgelegt ist.

## Claims

1. Method for controlling an output torque of an automated transmission (21) which is coupled to an internal combustion engine (1) and has a transmission control unit (24), wherein the internal combustion engine (1) has an exhaust gas turbocharger (7) and an air blower device (11) for blowing air into an intake line (3), having the following method steps:
(i) reception of a torque request by the transmission control unit (24);
(ii) generation of an air blowing-in signal by the transmission control unit (24) on the basis of the torque request and current operating parameters of the internal combustion engine (1) and of the automated transmission (21); and
(iii) control of the output torque by activating the air blower device (11) on the basis of the air blowing-in signal in order to blow air into the intake line (3) of the internal combustion engine (1) for a definable time period,
wherein in the event of a torque request to increase the torque when the output torque is being controlled, a shifting process of the automated transmission (21) to a relatively high transmission ratio occurs after the activation of the air blower device (11) has ended, or said shifting process does not occur, and that
in the event of a torque request to increase the torque when the output torque is being controlled, a shifting process of the automated transmission (21) to a relatively high transmission ratio occurs together with the activation, or during the activation, of the air blower device (11), and that
in the event of a torque request to decrease the torque when the output torque is being controlled, a shifting process of the automated transmission (21) to at least one relatively low transmission ratio occurs after the activation of the air blower device (11) has ended,
wherein the air blowing-in signal is generated for a definable time period during a double declutching process with opening of the throttle.

2. Method according to Claim 1, **characterized in that** the transmission control unit (25) receives the torque requests and current operating parameters of the internal combustion engine (1) by communicating with an engine control unit (17) or one or more other control units of the internal combustion engine (1).

3. Method according to Claim 2, **characterized in that** the other control units have the following devices for generating a change in torque: automatic cruise controller; electronic stabilizing means; traction controller; and/or driver assistance systems.

4. Method according to one of the preceding claims, **characterized in that** the generation of an air blowing-in signal takes into account operating parameters of the exhaust gas turbocharger (7), the operating parameters of the exhaust gas turbocharger comprising the rotational speed, delivery capacity and/or compressor pressure (P2).

5. Method according to one of the preceding claims, **characterized in that** the definable time period for the blowing in of air is defined by means of an operating parameter of the air blowing-in signal.

6. Method according to one of the preceding claims, **characterized in that** the air blowing-in signal is generated for a definable time period during a starting process.

7. Device (20) for controlling an output torque of an automated transmission (21) having a transmission control unit (24), which transmission (21) is coupled to an internal combustion engine (1) having an exhaust gas turbocharger (7), having:
an engine control unit (17) for controlling the internal combustion engine (1) and generating and/or passing on torque requests for the transmission control unit (24); and
an air blower device (11) having an air blowing-in feed section (12) with an air blowing-in control unit (15) for the controlled feeding of blowing-in air into an intake line (3) of the internal combustion engine (1), wherein the transmission control unit (24) is designed to generate an air blowing-in signal on the basis of the torque request and current operating parameters of the internal combustion engine (1) and of the automated transmission (21), and wherein the transmission control unit (24) is connected to the air blowing-in control unit (15) in order to control the output torque, wherein the transmission control unit (24) is embodied as follows: in the event of a torque request to increase the torque when the output torque is being controlled, to perform or to omit a shifting process of the automated transmission (21) to a relatively high transmission ratio after the activation of the air blower device (11) has ended, and in the event of a torque request to increase the torque when the output torque is being controlled, to perform a shifting process of the automated transmission (21) to at least one relatively high transmission ratio together with the activation, or during the activation, of the air blower device (11), and
in the event of a torque request to decrease the torque when the output torque is being controlled, to perform a shifting process of the automated transmission (21) to at least one relatively low transmission ratio after the activation of the air blower device (11) has ended, wherein
the transmission control unit (24) is designed to generate the air blowing-in signal for a definable time period during a double declutching process with opening of the throttle.

8. Device (20) according to Claim 7, **characterized in that** the transmission control unit (24) is designed to determine a delivery quantity of a compressor (8) of the exhaust gas turbo charger (7) and a compressor pressure (P2).

9. Device (20) according to Claim 8, **characterized in that** the transmission control unit (24) is connected to corresponding sensors (29, 30) in order to determine the delivery quantity and the compressor pressure (P2) and/or is designed to calculate said delivery quantity and compressor pressure (P2) from operating parameters.

10. Device (20) according to one of Claims 7 to 9, **characterized in that** the air blowing-in feed section (12) is a fresh gas line section of a device for supplying fresh air for the controlled blowing-in of compressed air.

11. Device (20) according to one of the preceding device claims, **characterized in that** the air blower device has a separate control unit for controlling it, or **in that** it is controlled by the engine control unit or the transmission control unit or some other control unit of a vehicle which performs at least one further control task and which is also designed for controlling the air blower device.

## Revendications

1. Procédé à commander un couple de sortie d'une boîte de vitesses automatisée (21) couplée avec un moteur à combustion interne (1), à un module de commande de transmission (24), audit moteur à combustion interne (1) comprenant un turbocompresseur (7) à gaz d'échappement et un moyen injecteur de l'air (11) pour l'injection de l'air dans un passage d'admission (3), comprenant les étapes suivantes :
(i) réception d'une demande de couple par ledit module de commande de transmission (24) ;
(ii) génération d'un signal de l'air injecté par ledit module de commande de transmission (24) selon ladite demande de couple et des paramètres de fonctionnement actuels dudit moteur à combustion interne (1) et de ladite boîte de vitesse automatisée (21) ; et
(iii) commande du couple de sortie par activation dudit moyen injecteur de l'air (11) selon ledit signal de l'air injecté pour l'injection de l'air dans ledit passage d'admission (3) dudit moteur à combustion interne (1) pour une période prédéterminable,
dans lequel, en réponse à une demande de couple pour l'augmentation du couple au cours de commande du couple de sortie, une opération de change de vitesse de ladite boîte de vitesses automatisée (21) en un plus haut palier de rapport est réalisée ou peut être omise après la fin de l'activation dudit moyen injecteur de l'air (11), et en ce
en réponse à une demande de couple pour l'augmentation du couple au cours de commande du couple de sortie une opération de change de vitesse des ladite boîte de vitesses automatisée (21) en au moins un plus haut palier de rapport est réalisée ensemble avec l'activation ou au cours de l'activation dudit moyen injecteur de l'air (11), et en ce
qu'en réponse à une demande de couple pour la réduction du couple au cours de commande du couple de sortie une opération de change de vitesse de ladite boîte de vitesses automatisée (21) est réalisée en au moins une plus petit palier de rapport après la fin de l'activation dudit moyen injecteur de l'air (11),
dans lequel ledit signal de l'air injecté est engendré au cours d'une opération de double débrayage pour une période prédéterminable.

2. Procédé selon la revendication 1, **caractérisé en ce que** ledit module de commande de transmission (25) reçoit les demande de couple et les paramètres de fonctionnement actuels dudit moteur à combustion interne (1) par communication avec un module de commande de moteur (17) ou un ou plusieurs autres modules de commande dudit moteur à combustion interne (1).

3. Procédé selon la revendication 2, **caractérisé en ce que** lesdits autres modules de commande comprennent les moyens suivants à engendrer un changement de couple : commande automatique de vitesse ; stabilisation électronique ; régulation du glissement d'entraînement ; et/ou systèmes d'assistance au conducteur.

4. Procédé selon une quelconque des revendications précédentes, **caractérisé en ce que** la génération d'un signal de l'air injecté prend des paramètres de fonctionnement dudit turbocompresseur à gaz d'échappement (7) en considération, auxdits paramètres de fonctionnement dudit turbocompresseur à gaz d'échappement (7) renfermant la vitesse, le débit et/ou la pression du compresseur (P2).

5. Procédé selon une quelconque des revendications précédentes, **caractérisé en ce que** ladite période prédéterminable pour l'injection de l'air est définie par un paramètre dudit signal de l'air injecté.

6. Procédé selon une quelconque des revendications précédentes, **caractérisé en ce que** ledit signal de l'air injecté set engendré au cours d'une opération de démarrage pour une période prédéterminable.

7. Dispositif (20) de commande d'un couple de sortie d'une boîte de vitesses automatisée (21) à un module de commande de transmission (24), qui est couplée avec un moteur à combustion interne (1) pourvu d'un turbocompresseur (7) à gaz d'échappement, comprenant :
un module de commande du moteur (17) à commander ledit moteur à combustion interne (1) et à engendrer et/ou à transmettre des demandes de couple pour ledit module de commande de transmission (24) ; et
un moyen injecteur de l'air (11) à une partie d'admission de l'air injecté (12) pourvue d'un module de commande de l'air injecté (15) pour l'admission commandée de l'air injecté dans une passage d'admission (3) dudit moteur à combustion interne (1), dans lequel ledit module de commande de transmission (24) est configuré pour la génération d'un signal de l'air injecté selon la demande de couple et des paramètres de fonctionnement actuels dudit moteur à combustion interne (1) et de ladite boîte de vitesses automatisée (21), et dans lequel ledit module de commande de transmission (24) est raccordé audit module de commande de l'air injecté (15) pour la commande du couple de sortie,
audit module de commande de transmission (24) étant conçu pour les opérations suivantes : réaliser ou omettre, en réponse à une demande de couple pour l'augmentation du couple au cours de commande du couple de sortie, une opération de change de vitesse de ladite boîte de vitesses automatisée (21) en un plus haut palier de rapport après la fin de l'activation dudit moyen injecteur de l'air (11), et
en réponse à une demande de couple pour l'augmentation du couple au cours de commande du couple de sortie, réalisation d'une opération de change de vitesse des ladite boîte de vitesses automatisée (21) en au moins un plus haut palier de rapport est réalisé ensemble avec l'activation ou au cours de l'activation dudit moyen injecteur de l'air (11), et
en réponse à une demande de couple pour la réduction du couple au cours de commande du couple de sortie, réalisation d'une opération de change de vitesse de ladite boîte de vitesses automatisée (21) en au moins une plus petit palier de rapport après la fin de l'activation dudit moyen injecteur de l'air (11),
dans lequel ledit module de commande de transmission (24) st conçu pour la génération dudit signal de l'air injecté au cours d'une opération de double débrayage pour une période prédéterminable.

8. Dispositif (20) selon la revendication 7, **caractérisé en ce que** ledit module de commande de transmission (24) est conçu pour l'établissement d'un débit d'un compresseur (8) dudit turbocompresseur à gaz d'échappement (7) et d'une pression de compression (P2).

9. Dispositif (20) selon la revendication 8, **caractérisé en ce que** ledit module de commande de transmission (24) est raccordé aux détecteurs (29, 30) correspondants pour la détection du débit et de la pression de compresseur (P2), et/ou est conçu pour le calcul par dérivation des paramètres de fonctionnement.

10. Dispositif (20) selon une quelconque des revendications 7 à 9, **caractérisé en ce que** ladite partie d'admission de l'air injecté (12) est une partie de passage de gaz frais d'un module d'alimentation en gaz frais pour l'injection commandée de l'air comprimé.

11. Dispositif (20) selon une des revendications de dispositif précédentes, **caractérisé en ce que** ledit module de l'air injecté comprend un module de commande séparé pour sa commande, ou **en ce que** sa commande se fait moyennant ledit module de commande de moteur ou ledit module de commande de transmission ou quelque autre module de commande d'un véhicule, qui assume au moins une tâche de commande additionnelle, ce module étant également conçu en tant qu'unité supplémentaire pour la commande dudit module de l'air injecté.
